# FASCICULE DE BREVET EUROPEEN

(11) **EP 1 086 315 B1**
(45) Date de publication et mention de la délivrance du brevet: **07.04.2004**
(21) Numéro de dépôt: 99929154.5
(22) Date de dépôt: 08.06.1999
(51) Int. Cl.: F15C 1/22, G01F 1/32

(54) **OSCILLATEUR FLUIDIQUE, PIECE DESTINEE A ETRE INCORPOREE DANS UN OSCILLATEUR FLUIDIQUE ET PROCEDE DE FABRICATION D'UN TEL OSCILLATEUR FLUIDIQUE**
FLUIDISCHER OSZILLATOR, STÜCK ZUM EINBAU IN EINEM FLUIDISCHEN OSZILLATOR, UND VERFAHREN ZUR HERSTELLUNG EINES SOLCHEM, FLUIDISCHEM OSZILLATORS
FLUIDIC OSCILLATOR, PART DESIGNED TO BE INCORPORATED IN A FLUIDIC OSCILLATOR AND METHOD FOR MAKING SUCH A FLUIDIC OSCILLATOR

(30) Priorité: 17.06.1998 FR 9807675
(43) Date de publication de la demande: 28.03.2001
(73) Titulaire: SCHLUMBERGER INDUSTRIES, 92120 Montrouge (FR)
(72) Inventeur: CARVER, Andrew, Seneca, SC 29678 (US); HERNOUX, Luc, 86170 Cisse (FR)
(74) Mandataire: Feray, Valérie
(86) Numéro de dépôt international: PCT/EP1999/003955
(87) Numéro de publication internationale: WO 1999/066214

(56) Documents cités:
- EP-A- 0 381 344
- WO-A-93/18372
- US-A- 4 182 172
- VIETS, H.: "Flip-Flop Jet Nozzle" AIAA JOURNAL, vol. 13, no. 10, octobre 1975 (1975-10), pages 1375-1379, XP002095509
- PATENT ABSTRACTS OF JAPAN vol. 013, no. 587 (P-983), 25 décembre 1989 (1989-12-25) & JP 01 250725 A (OSAKA GAS CO LTD), 5 octobre 1989 (1989-10-05)

## Description

L'invention est relative à un oscillateur fluidique symétrique par rapport à un plan de symétrie longitudinal P, comprenant une enceinte délimitant une chambre d'oscillation et ayant une ouverture d'entrée et une ouverture de sortie par lesquelles s'écoule le fluide et qui sont alignées saivant ledit plan P dans une direction dite longitudinale, ladite ouverture d'entrée étant réalisée sous la forme d'une fente étroite dans une direction transversale audit plan P, allongée dans une direction contenue dans ledit plan P et perpendiculaire à la dite direction longitudinale.

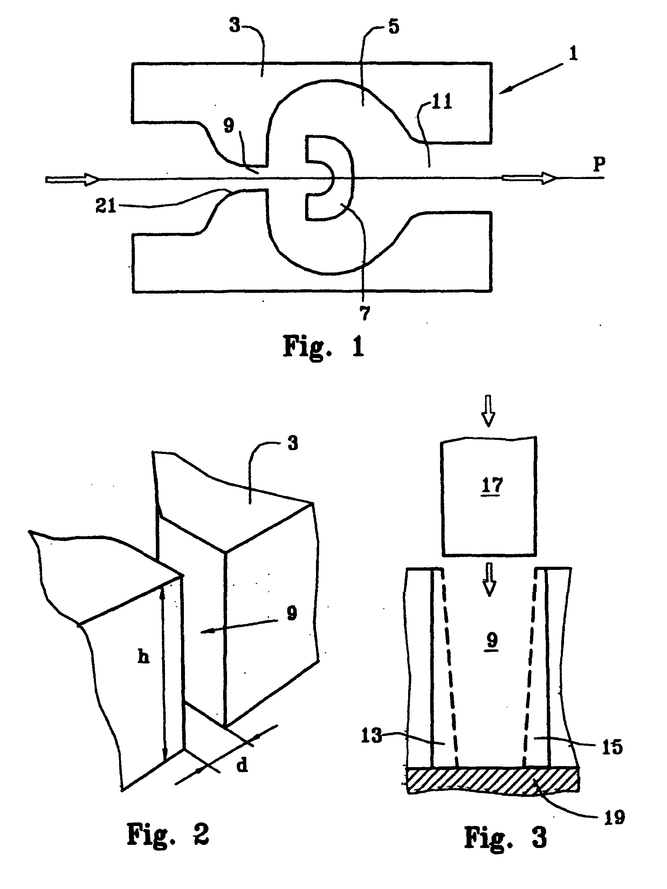

Les oscillateurs fluidiques sont largement connus. Le document EP 0 381 344 décrit un oscillateur fluidique fonctionnant sur le principe de l'effet Coanda. Le jet issu d'une tuyère d'entrée suivi d'un canal d'entrée s'attache spontanément à une des parois latérales et s'écoule dans des premier et second canaux principaux. Une partie de l'écoulement provenant du canal d'entrée est dérivée par un canal de réaction. Ceci a pour effet de décoller le jet de cette paroi et de l'attacher à la paroi opposée. La phénomène se reproduit, ce qui entraîne une oscillation permanente de l'écoulement entrant. L'écoulement dans les premier et second canaux principaux et dans les canaux de réaction varie à une fréquence dépendant du débit de l'écoulement entrant. La figure 1 illustre un exemple d'un oscillateur fluidique en vue de dessus.

Cet oscillateur 1, symétrique par rapport à un plan de symétrie longitudinal P, comprend une enceinte 3 délimitant une chambre dite d'oscillation 5 et un obstacle 7 logé à l'intérieur de celle-ci.

L'enceinte 3 présente une ouverture d'entrée 9 et une ouverture de sortie 11 alignées suivant le plan P et par lesquelles le fluide s'écoule dans le sens indiqué par les flèches sur cette figure.

L'ouverture d'entrée 9 se présente sons la forme d'une fente de dimension transversale ou largeur 1 faible devant l'une des dimensitons longitudinales appelée hauteur h et qui est définie dans un plan perpendiculaire à celui du plan de la figure 1 (fig.2).

Classiquement la largeur 1 est environ égale à un cinquième de la hauteur h.

Cette fente permet de transformer un écoulement de fluide en jet de fluide oscillant transversalement dans un plan perpendiculaire au plan P, c'est-à-dire dans un plan parallèle à celui de la figure 1.

Pour obtenir de bonnes performances métrologiques de l'oscillateur il faut maîtriser l'oscillation du jet de fluide et donc contrôler parfaitement les dimensions de la fente 9 lors de la fabrication dudit oscillateur fluidique.

La pièce représentée à la figure 1 est par exemple en aluminium et est fabriquée par des opérations de moulage/démoulage.

Toutefois, il n'est pas possible de réaliser directement la pièce avec les dimensions souhaitées par les seules opérations de moulage/démoulage.

Aussi, la pièce qui vient d'être démoulée est ensuite usinée afin d'obtenir la précision souhaitée sur les dimensions de celle-ci et notamment sur les dimensions de la fente 9.

L'opération d'usinage est effectuée notamment sur la fente 9 de la pièce issue du démoulage et qui est représentée en vue de face sur la figure 3.

Sur cette figure les parties latérales 13 et 15 de la fente 9 représentées en pointillés définissent le profil traditionnel de forme tronconique obtenu après démoulage.

L'opération d'usinage va alors consister à supprimer ces parties 13 et 15 en pointillés à l'aide d'un outil 17 tel qu'une fraise qui est insérée dans la fente par le haut (comme indiqué sur la figure 3) ou par l'ouverture débouchant dans la chambre d'oscillation 5.

Cependant, comme la fente est allongée suivant sa hauteur h et de faible largeur 11a fraise 17 doit être fine (par exemple d'un diamètre de 16mm pour une valeur de 1 égale a 19mm) et de ce fait n'est pas assez solide mécaniquement.

En raison de la finesse de la fraise celle-ci peut donc être soumise à des vibrations mécaniques durant son utilisation et ainsi l'état de surface de la partie interne de la fente ne sera pas maîtrisé sur toute sa hauteur et notamment au fond de celle-ci, c'est-à-dire à proximité de la partie représentée 19 sur la figure 3.

En outre, en raison de sa finesse la fraise risque d'être détériorée au cours de son utilisation. Pour éviter une telle détérioration, il est préconisé de ralentir la vitesse d'usinage ce qui augmente la durée de l'opération et en accroît le coût économique.

De telles mesures sont difficilement acceptables dans un environnement industriel.

Par ailleurs, lors de l'opération d'usinage, lorsque la fraise sort de la fente par la partie amont de la fente (représentée par la référence notée 21 sur la figure 1) en sens opposé à celui des flèches indiquées sur cette figure, les tolérances de cette partie qui provient directement du démoulage sont mal contrôlées.

Ceci peut être préjudiciable car le conditionnement de l'écoulement du fluide dans cette région doit être parfaitement contrôlé.

La présente invention vise à remédier à au moins un des problèmes mentionnés ci-dessus.

La présente invention a ainsi pour objet un oscillateur fluidique symétrique par rapport à un plan de symétrie longitudinal P, comprenant une enceinte délimitant une chambre d'oscillation et ayant une ouverture d'entrée et une ouverture de sortie par lesquelles s'écoule le fluide et qui sont alignées suivant ledit plan P dans une première direction dite longitudinale A, ladite ouverture d'entrée étant réalisée sous la forme d'une fente étroite dans une deuxième direction B dite transversale audit plan P, allongée dans une troisième direction C contenue dans ledit plan P et perpendiculaire à ladite première direction longitudinale A, caractérisé en ce que ladite fente est aménagée dans une pièce qui est amovible par rapport à ladite enceinte.

Ainsi, la pièce amovible et l'enceinte de l'oscillateur fluidique peuvent être fabriquées séparément : la pièce amovible et tout particulièrement la fente sont fabriquées avec précision alors que l'enceinte peut être fabriquée plus sommairement.

En effet, il suffit de prévoir dans l'enceinte, lors des opérations de moulage/démoulage, une cavité de grandes dimensions à l'endroit où se trouvera la fente puis d'usiner de façon sommaire les parois de l'enceinte définissant cette cavité avec un outil de plus grandes dimensions que dans l'art antérieur.

La durée de l'opération d'usinage de l'enceinte sera ainsi réduite et les risques de détérioration de l'outil seront évités.

Plus précisément, la pièce amovible comporte deux parois latérales, allongées suivant la troisième direction C et qui sont espacées suivant la deuxième direction B de manière à définir entre elles la dimension de ladite fente suivant cette deuxième direction appelée également largeur 1.

La pièce amovible peut comporter deux embases, perpendiculaires à la troisième direction C et disposées aux deux extrémités opposées des parois latérales de manière à définir entre lesdites embases la dimension de la fente suivant la troisième direction appelée également hauteur h.

Selon une caractéristique de l'invention, la pièce amovible est insérée dans une cavité prévue dans l'enceinte et dont la dimension transversale d est légèrement supérieure à celle de la dite pièce.

Avantageusement, la pièce amovible comporte une gorge pratiquée sur une zone périphérique de la dite pièce qui est contenue dans un plan transversal défini par les deuxième et troisième directions, ladite gorge périphérique étant destinée à recevoir un organe d'étanchéité coopérant notamment avec les parois de l'enceinte qui définissent la cavité.

Selon un autre mode de réalisation de l'invention, les parois latérales de la pièce amovible se raccordent aux parois de l'enceinte respectivement par au moins une de leurs parties et se prolongent au delà desdites parties suivant la première direction dite longitudinale de manière à faire saillie dans la chambre d'oscillation.

Ainsi, les parois prolongées dans la -chambre d'oscillation servent à protéger le jet de fluide formé dans la fente des influences extérieures susceptibles de perturber l'oscillation dudit jet.

Avantageusement, deux emplacements correspondants sont respectivement aménagés sur chaque embase en amont de la fente afin de recevoir un élément qui est apte à modifier le profil des vitesses de l'écoulement de fluide en amont de ladite fente.

L'invention a également pour objet une pièce destinée à être incorporée dans un oscillateur fluidique tel que décrit précédemment, ladite pièce comprenant deux parois latérales, allongées suivant une direction C et qui sont espacées suivant une direction B perpendiculaire à la direction C de manière à définir entre elles une fente suivant cette direction B.

La pièce peut comporter deux embases perpendiculaires à la direction C -et disposées aux deux extrémités opposées des parois latérales de manière à définir entre lesdites embases la dimension de la fente suivant cette direction C.

Avantageusement. une gorge est pratiquée sur une zone périphérique de la pièce qui est contenue dans un plan défini par les première et deuxième directions, ladite gorge étant destinée à recevoir un organe d'étanchéité.

Les parois latérales de la pièce s'étendent dans une direction A perpendiculaire à un plan défini par les directions B et C de manière à faire saillie dans la chambre d'oscillation de l'oscillateur fluidique lorsque ladite pièce est incorporée dans celui-ci.

L'invention a aussi pour objet un procédé de fabrication d'un oscillateur fluidique symétrique par rapport à un plan de symétrie longitudinal P, comprenant une enoeinte délimitant une chambre d'oscillation et ayant une ouverture d'entrée et une ouverture de sortie par lesquelles s'écoule le fluide et qui sont alignées suivant ledit plan P dans une première direction dite longitudinale, ladite ouverture d'entrée étant réalisée sous la forme d'une fente étroite dans une deuxième direction dite transversale audit plan P, allongée dans une troisième direction parallèle audit plan P et perpendiculaire à la dite première direction longitudinale, caractérisé en ce que ledit procédé consiste à fabriquer ladite enceinte en pratiquant dans celle-ci une cavité de dimension transversale supérieure à la dimension transversale de ladite fente, à fabriquer séparément une pièce en aménageant dans celle-ci ladite fente et à insérer ladite pièce dans ladite cavité.

Plus précisément, le procédé selon l'invention consiste à fabriquer l'enceinte de l'oscillateur fluidique par des opérations de moulage/démoulage.

Le procédé selon l'invention consiste également à fabriquer la pièce dans laquelle est aménagée la fente par des opérations de moulage/démoulage.

D'autres caractéristiques et avantages apparaîtront au cours de la description qui va suivre, donnée uniquement à titre d'exemple non limitatif et faite -en référence aux dessins annexés sur lesquels :
- la figure 1 est une vue schématique de dessus d'un oscillateur fluidique selon l'art antérieur,
- la figure 2 est une vue partielle agrandie en perspective de l'oscillateur fluidique représenté sur la figure 1 sur laquelle seule la fente a été représentée,
- la figure 3 est une vue partielle agrandie de face de la fente représentée sur la figure 2,
- la figure 4 est une vue en perspective de l'intérieur du bloc central de l'oscillateur fluidique et de la pièce 55 dans laquelle-est aménagée la fente et de l'obstacle 29 séparés dudit bloc,
- la figure 5 est une vue en perspective agrandie de la pièce 55 représentée à la figure 4,
- la figure 6 est une vue de la pièce 55 en coupe dans un plan parallèle au plan défini par les directions A et B de la figure 4,
- la figure 7 représente la pièce 55 vue en coupe dans le plan de la figure 6 à l'intérieur de son moule de fabrication,
- la figure 8 est une vue en perspective d'un autre mode de réalisation de la pièce 55 de la figure 5,
- la figure 9 est une vue de la pièce 91 de la figure 8 en coupe dans un plan parallèle au plan défini par les directions A et B de la figure 4,
- la figure 10 représente la pièce 91 de la figure 8 selon une vue en perspective par l'arrière,
- la figure 11 est une vue en perspective de l'élément 117 destiné à être inséré dans la pièce 91 des figures 8 à 10.

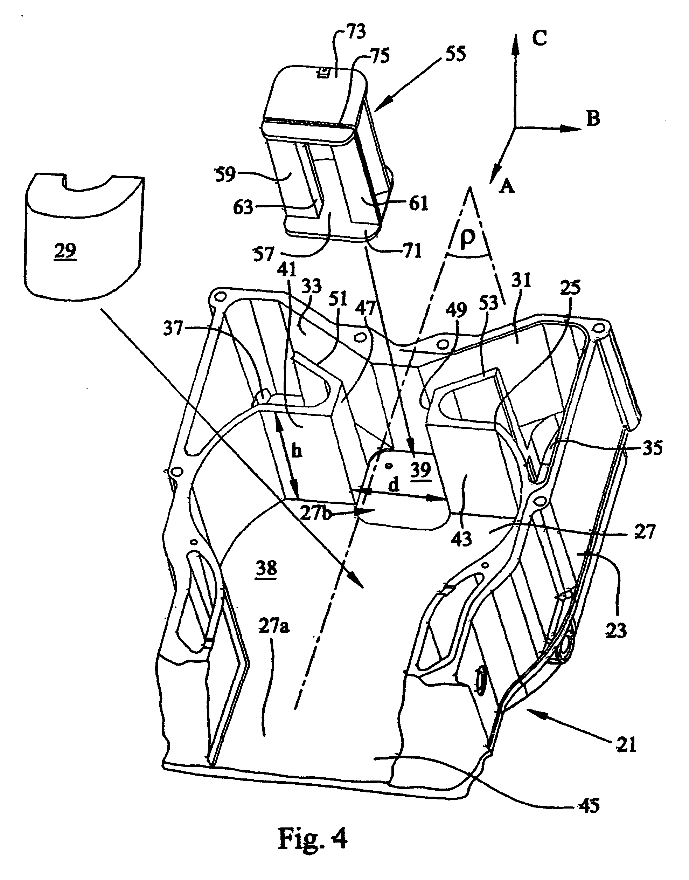

Comme représenté à la figure 4 et désigné par la référence générale notée 21, un oscillateur fluidique est réalisé sous la forme d'un bloc central 23 dont la paroi supérieure formant couvercle a été enlevée.

Le bloc central de l'oscillateur fluidique est symétrique par rapport à un plan de symétrie longitudinal P (Fig.4).

Ce bloc central comprend une enceinte 25 qui délimite une chambre dite d'oscillation 27.

Un obstacle 29 est prévu pour être positionné dans la chambre d'oscillation à l'emplacement indiqué par la flèche.

Le bloc central comporte également deux passages 31, 33 inclinés de manière à former un V et qui sont munis chacun à une de leurs extrémités d'un orifice 35, 37 aménagé dans la paroi inférieure 38 dudit bloc central.

L'écoulement de fluide emprunte ces orifices 35, 37 et les passages consécutifs 31, 33 avant de pénétrer dans la chambre d'oscillation 27.

Les passages 31, 33 débouchent dans une cavité 39 qui est notamment définie par les parois latérales 41, 43 de l'enceinte 25.

Les parois latérales 41, 43 s'étendent à partir d'une extrémité 27a dite aval de la chambre d'oscillation 27, parallèlement entre elles et au plan P puis s'écartent dudit plan P pour donner à la chambre une forme bombée et se referment en direction du plan P perpendiculairement à celui-ci jusqu'à l'extrémité opposée 27b dite amont de la-chambre d'oscillation.

Les deux extrémités 27a, b sont alignées suivant une première direction A dite longitudinale contenue dans le plan P.

A l'extrémité 27a de la chambre d'oscillation 27, les parois latérales 41, 43 sont parallèles au plan P et définissent entre elles une ouverture dite de sortie 45 par laquelle le fluide s'écoule hors de la chambre d'oscillation 27.

A l'extrémité 27b de la chambre d'ioscillation, les parois latérales 41, 43 sont écartées l'une de l'autre suivant une deuxième direction B dite transversale au plan P et définissent ainsi la largeur d de la cavité 39.

Les parois latérales 41, 43 s'étendent ensuite parallèlement au plan P vers l'amont, sous la forme de deux portions de parois 47, 49 définissant ainsi une partie de la dimension longitudinale de la cavité 39, et s'écartent alors dudit plan P suivant une direction inclinée par rapport aux directions A et B pour se confondre respectivement avec l'une des parois 51, 53 délimitant chacune les passages 31, 33.

Les parois latérales 41, 43 ont une dimension h appelée hauteur qui est alignée suivant une troisième direction C perpendiculaire aux deux premières directions A et B et h est par exemple égale à 91,3 mm.

Lors de la fabrication par moulage/démoulage du bloc central 23 de l'oscillateur fluidique qui est par exemple en aluminium, les parois latérales 41, 43 et leurs prolongements 47, 49 et 51, 53 sont obtenus avec ce qui est usuellement appelé un cône de démoulage tel que représenté en pointillés à la figure 3.

Le bloc central est ensuite usiné avec une fraise afin d'éliminer le cône de démoulage sur les parois latérales et d'obtenir les dimensions souhaitées.

Etant donné que la largeur de la cavité 39 est bien supérieure à la largeur de l'ouverture d'entrée 9 de l'oscillateur fluidique représenté à la figure 1, il est possible d'utiliser une fraise plus robuste que dans l'art antérieur pour cette opération d'usinage, et par exemple de diamètre égal à 25mm.

Ainsi, les risques de détérioration de la fraise sont évités et la durée de l'opération d'usinage est considérablement réduite par rapport à l'art antérieur.

De plus, les parois latérales peuvent être usinées sans difficulté sur toute leur hauteur.

En outre, il convient de noter que cette opération d'usinage peut être réalisée de manière assez "sommaire" car les dimensions obtenues après usinage des parois latérales au droit de la cavité 39 ne sont pas les dimensions définitives offertes à l'écoulement de fluide comme cela sera expliqué ultérieurement.

De ce fait, le temps d'usinage peut être encore davantage réduit si l'on se contente d'un usinage sommaire.

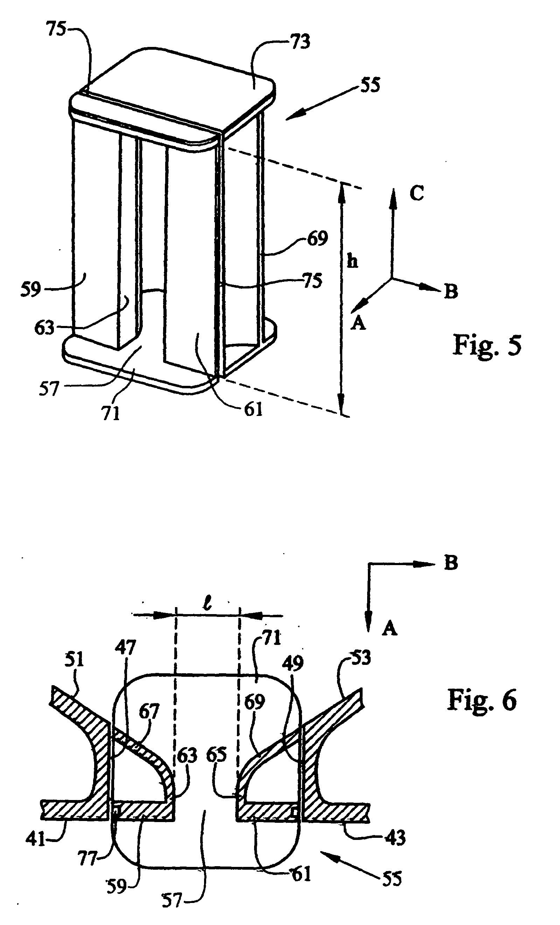

Ainsi que représenté en perspective à la figure 4 et à la figure 5, une pièce 55 est destinée à être insérée dans la cavité 39 entre les portions 47, 49 des parois latérales 41, 43 dont la largeur d est légèrement supérieure à celle de ladite pièce.

Cette pièce est également représentée à la figure 6 en coupe dans un plan contenant les directions A et B dans une position où elle est insérée entre les portions de parois 47, 49.

La largeur de la pièce 55 est par exemple égale à 60mm et la dimension d est par exemple égale à 61 mm.

La pièce 55 comporte deux parois latérales qui sont allongées suivant la troisième direction C et qui sont espacées suivant la deuxième direction B de manière à définir entre elles une fente étroite 57.

Cette fente constitue l'ouverture d'entrée qui est alignée avec l'ouverture de sortie 45 suivant la première direction A et qui permet de transformer l'écoulement de fluide en jet débouchant dans la chambre d'oscillation 27.

Comme représenté sur la figure 6, les parois latérales de la pièce 55 comportent chacune une partie 59, 61 qui est alignée avec la paroi latérale correspondante 41, 43 de l'enceinte, définissant entre elles la largeur 1 de la fente 57 qui est par exemple égale à 19mm.

Les parois latérales de la pièce 55 comportent également respectivement, d'une part, deux parties 63, 65 parallèles entre elles et au plan P et qui définissent la dimension longitudinale ou longueur de la fente 57 et, d'autre part, deux parties 67, 69 qui s'écartent dudit plan P de manière inclinée par rapport aux directions A et B afin de se raccorder aux parois 51, 53 des passages 31, 33.

La pièce 55 comporte deux embases 71, 73, réalisées sous la forme de plaques minces perpendiculaires à la troisième direction C, et qui sont disposées aux deux extrémités opposées des parois latérales de ladite pièce de manière à définir entre lesdites embases la hauteur de la fente 57 qui correspond à la dimension h.

Comme représenté sur la figure 5 chaque embase possède une légère épaisseur ou hauteur et la paroi inférieure 38 du bloc central 23 présente au droit de la cavité 39 un léger retrait (Fig.4) de la hauteur correspondant à l'épaisseur de l'embase 71.

De manière similaire, un retrait de hauteur correspondant à l'épaisseur de l'embase 73 est prévu dans le couvercle non représenté du bloc central 23.

En outre, la pièce 55 comporte une gorge 75 pratiquée sur une zone périphérique de ladite pièce qui est contenue dans un plan transversal au plan P (Fig.4).

Cette gorge est destinée à recevoir un joint d'étanchéité 77 représenté à la figure 6 et qui est monté avant l'insertion de la pièce 55 dans la cavité 39.

La figure 6 montre que le joint d'étanchéité 77 coopère avec les portions de parois latérales 47, 49 de l'enceinte 25 afin d'assurer que l'écoulement de fluide emprunte la fente 57 et ne s'infiltre pas dans la chambre d'oscillation entre lesdites portions 47, 49 et la pièce 55.

Le joint d'étanchéité 77 coopère également avec la paroi inférieure 38 du bloc central et, de manière non représentée sur les figures, avec le couvercle dudit bloc central.

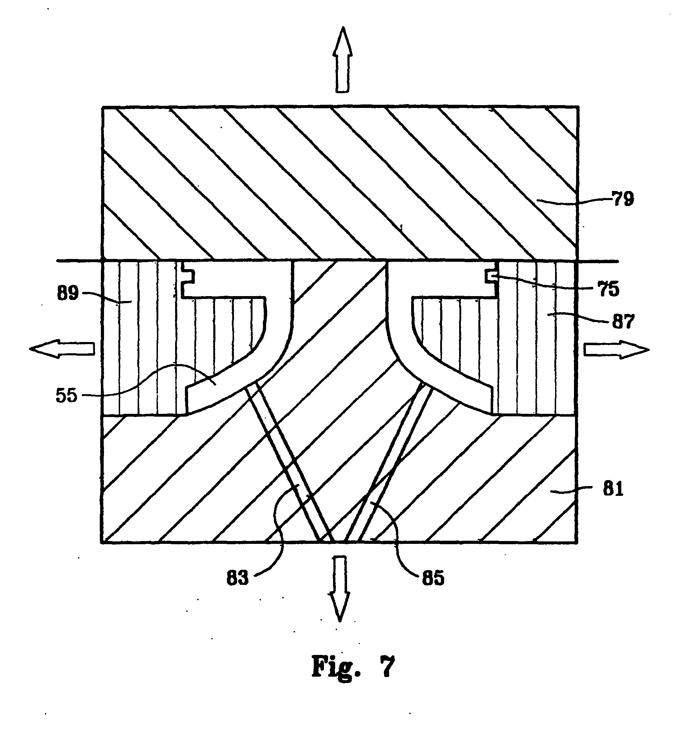

La pièce 55, par exemple en matière plastique est fabriquée par moulage/démoulage dans un moule à injection tel que celui représenté à la figure 7 où l'on voit ladite pièce en coupe dans un plan parallèle à celui de la figure 6.

Le moule comporte deux plaques de moulage d'empreinte 79, 81 dont l'une 81 définit la forme intérieure de la fente 57 et comporte deux canaux 83, 85 permettant respectivement l'amenée de la matière liquide dans la zone interne audit moule et qui est laissée libre pour la formation de la pièce 55 après solidification.

Le moule comporte également deux tiroirs 87, 89 qui définissent la forme extérieure de la pièce 55 avec la gorge périphérique 75.

Lorsque le moulage est terminé les tiroirs 87, 89 et les plaques de moulage d'empreintes 79, 81 sont retirés suivant les directions indiquées par les flèches et la pièce 55 ainsi démoulée constitue la pièce finale.

Le contrôle des tolérances de fabrication de la pièce 55 et de son état de surface -est particulièrement important puisque la métrologie de l'oscillateur fluidique dépend de la qualité du jet de fluide (section constante, centrage du jet par rapport à l'obstacle...) formé par le passage à travers cette pièce et cette qualité du jet dépend directement des tolérances de fabrication et de l'état de surface interne des parties 63, 65, 67, 69, 71 et 73.

Le procédé de moulage par injection permet par exemple d'obtenir une précision de l'ordre de 1/10^{e} sur les dimensions de la pièce 55 alors que seule une précision de l'ordre de 5/10^{e} est demandée pour la fabrication du bloc central en aluminium.

Un autre avantage lié au fait d'avoir une pièce 55 séparé de l'enceinte réside dans le fait que le procédé de fabrication de la pièce 55 est répétable et donc que ladite pièce peut être obtenue avec des qualités répétables au cours du temps, influant ainsi de manière positive sur la métrologie de l'oscillateur fluidique.

Le fait que la pièce 55 soit amovible par rapport à l'enceinte 25 et au bloc central 23 permet, non seulement une maintenance simplifiée, mais également d'interchanger la pièce 55 avec une autre pièce dont la fente aura une largeur 1 différente, ceci afin de s'adapter à une gamme de débits différents.

Par exemple, la pièce 55 dont les dimensions ont été définies plus haut crée une perte de charge de 13mbars pour un débit de 250m³/h et, pour la même perte de charge, il est possible d'augmenter le débit jusqu'à 300m³/h en augmentant la largeur l en conséquence (environ 10%).

L'invention présente encore un autre avantage : étant donné que les opérations de fabrication de la pièce 55 et de l'enceinte 25 (c'est-à-dire du bloc central 27) sont séparées, le fait que la pièce 55 puisse être malencontreusement détériorée durant sa fabrication ne remet pas en cause la fabrication de tout l'oscillateur fluidique.

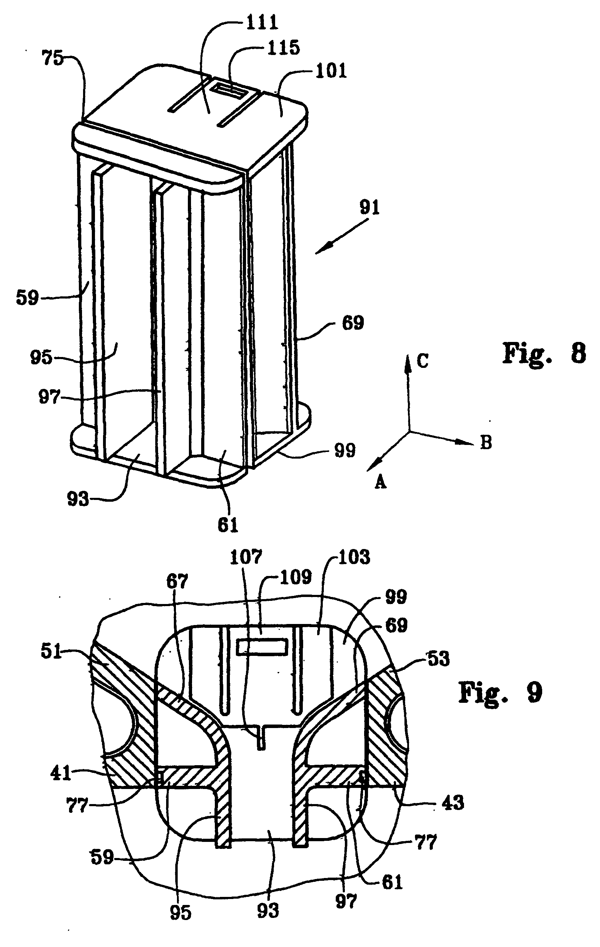

Les figures 8 à 11 illustrent un autre mode de réalisation de l'invention dans lequel deux caractéristiques indépendantes supplémentaires ont été ajoutées. Dans ce mode de réalisation les éléments non modifiés par rapport aux figures 4 à 7 conserveront les mêmes références.

Comme représenté sur les figures 8 à 11, la pièce amovible 91 destinée à être intégrée dans le logement 39 du bloc central 23 de l'oscillateur fluidique représenté à la figure 4 comporte deux parois latérales allongées suivant la troisième direction C et qui sont espacées suivant la deuxième direction B de manière à définir entre elles une fente étroite 93.

Les parois latérales de la pièce 91 sont constituées de plusieurs parties : les parties 59, 61, 67, 69 sont identiques aux parties de la pièce 55 qui portent les mêmes références et deux parties 95, 97 parallèles entre elles qui définissent à proprement parler la fente 93 et qui font saillie par rapport au plan transversal dans lequel sont contenues les parties 59, 61 et les parois 41 et 43 de l'enceinte 25.

Ces deux parties de parois latérales 95, 97 qui se prolongent à l'intérieur de la chambre d'oscillation 27 du bloc central 23 forment un écran de protection pour le jet de fluide contre l'apparition des tourbillons de pression élevée situés dans les zones délimitées par les parties 59, 95, d'une part, et 61, 97 d'autre part, et qui contribuent à plier ledit jet de manière excessive.

Un oscillateur fluidique muni de deux parties de parois latérales qui se prolongent dans la chambre d'oscillation est décrit dans la demande de brevet français n° 97 13145 déposée le 17 Octobre 1997 par la Demanderesse.

De manière analogue à ce qui est décrit pour la pièce 55, la pièce 91 comporte également deux embases identiques 99, 101 disposées aux deux extrémités de ladite pièce. Chaque embase 99, 101 est respectivement équipée d'un emplacement 103, 105 situé en amont de la fente 93 et qui se présente sous la forme d'une partie évidée par rapport au reste de l'embase correspondante.

Les deux emplacements, disposés à la verticale l'un de l'autre, présentent chacun une forme sensiblement rectangulaire à l'exception des parties proches des parois 67 et 69 et qui suivent le profil de ces parois et se prolongent suivant la direction A sous la forme d'une rainure 107 pratiquée dans l'embase correspondante.

Chaque emplacement comporte une partie centrale 109, 111 séparée du reste de l'emplacement par deux évidements 106, 108 et 110, 112 alignés suivant la direction A et qui se présente sous la forme d'une lamelle.

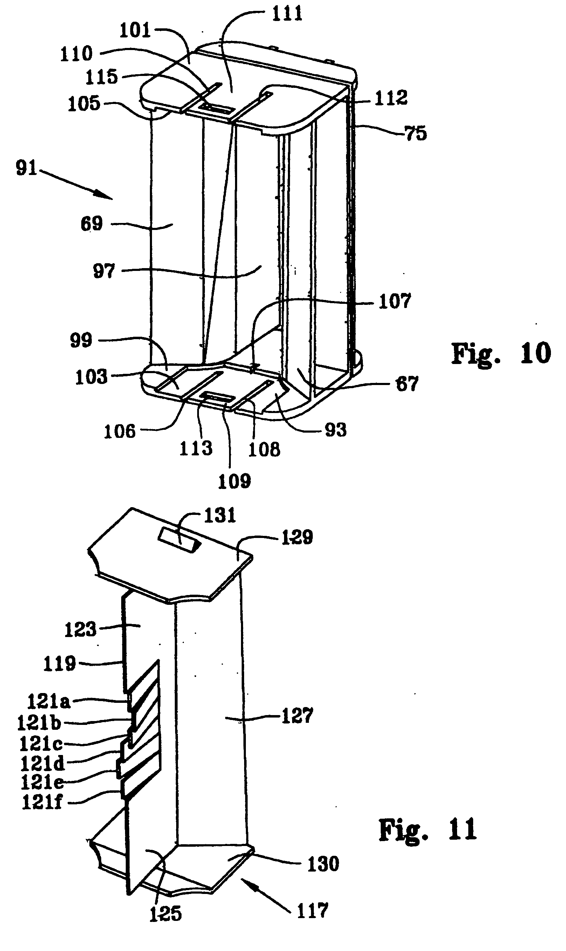

Les lamelles 109, 111 possèdent deux orifices 113, 115 alignés à la verticale l'un de l'autre. Un élément 117 représenté en perspective à la figure 11 se présente sous la forme d'une plaque plane 119, dans la partie centrale de laquelle plusieurs portions 121a-f sensiblement rectangulaires ont été partiellement découpées du reste de ladite plaque.

La plaque 119 présente deux parties planes 123, 125 à ses extrémités encadrant la partie centrale et les portions rectangulaires 121 a-f possèdent une orientation angulaire particulière par rapport au plan dans lequel sont-contenues les parties planes 123, 125.

La plaque 119 est prolongée par un support 127 en forme de prisme droit à section triangulaire, ayant à ses deux faces d'extrémités opposées deux plaques dites d'extrémité 129, 130 qui sont munies chacune d'un ergot 131.

Les plaques d'extrémité 129, 130 ont un profil complémentaire des emplacements 103, 105.

L'élément 117 est destiné à être inséré dans la pièce 91 au droit des emplacements 103, 105 en étant guidé par les plaques 129, 130 et les ergots 131 coopèrent avec les orifices 113, 115 afin d'immobiliser l'élément 117.

Pour permettre le montage de l'élément 117 dans la pièce 91 il est important de prévoir des lamelles 109, 111 possédant une certaine élasticité.

L'élément 117 une fois installé dans la pièce 91 a pour fonction de modifier le profil de vitesses de l'écoulement de fluide en amont de la fente 93 grâce aux portions 121 a-f qui affectent principalement la partie centrale du profil de vitesses.

Un tel élément peut être nécessaire lorsque l'écoulement provenant de l'amont n'est pas maîtrisé.

Cet élément peut également s'adapter sur la pièce 55.

## Revendications

1. Oscillateur fluidique (21) symétrique par rapport à un plan de symétrie longitudinal (P), comprenant une enceinte (25) délimitant une chambre d'oscillation (27) et ayant une ouverture d'entrée et une ouverture de sortie (45) par lesquelles s'écoule le fluide et qui sont alignées suivant ledit plan (P) dans une première direction dite longitudinale (A), ladite ouverture d'entrée étant réalisée sous la forme d'une fente (57 ; 93) étroite dans une deuxième direction (B) dite transversale audit plan (P), allongée dans une troisième direction (C) parallèle audit plan P et perpendiculaire à la dite première direction longitudinale (A), **caractérisé en ce que** ladite fente (57 ; 93) est aménagée dans une pièce (55 ; 91) qui est amovible par rapport à ladite enceinte (25).

2. Oscillateur fluidique selon la revendication 1, dans lequel la pièce amovible (55 ; 91) comporte deux parois latérales (63, 65 ; 95, 97), allongées suivant la troisième direction (C) et qui sont espacées suivant la deuxième direction (B) de manière à définir entre elles la dimension de ladite fente (57 ; 93) suivant cette deuxième direction appelée également largeur 1.

3. Oscillateur fluidique selon la revendication 2, dans lequel la pièce amovible (55 ; 91) comporte deux embases (71, 73 ; 99, 101), perpendiculaires à la troisième direction (C) et disposées aux deux extrémités opposées des parois latérales de manière à définir entre lesdites embases la dimension de la fente (57 ; 93) suivant la troisième direction (C) appelée également hauteur h.

4. Oscillateur fluidique selon l'une des revendications 1 à 3, dans lequel la pièce amovible (55 ; 91) est insérée dans une cavité (39) prévue dans l'enceinte (25) et dont la dimension transversale d est légèrement supérieure à celle de la dite pièce.

5. Oscillateur fluidique selon la revendication 4, dans lequel la pièce amovible (55 ; 91) comporte une gorge (75) pratiquée sur une zone périphérique de la dite pièce qui est contenue dans un plan transversal défini par les directions (B) et (C), ladite gorge périphérique étant destinée à recevoir un organe d'étanchéité (77) coopérant notamment avec les parois de l'enceinte (25) qui définissent la cavité (39).

6. Oscillateur fluidique selon les revendications 2 et 4, dans lequel les parois latérales (95, 97) de la pièce amovible (91) se raccordent aux parois de l'enceinte (25) respectivement par au moins une de leurs parties et se prolongent au delà desdites parties suivant la première direction dite longitudinale de manière à faire saillie dans la chambre d'oscillation (27).

7. Oscillateur fluidique selon la revendication 3. dans lequel deux emplacements (103, 105) correspondants sont respectivement aménagés sur chaque embase (99, 101) en amont de la fente (93) afin de recevoir un élément (117) qui est apte à modifier le profil des vitesses de l'écoulement de fluide en amont de ladite fente.

8. Pièce amovible permettant de transformer un écoulement de fluide en jet de fluide oscillant (55 ; 91) destinée à être incorporée dans un oscillateur fluidique (21) selon l'une des revendications 1 à 7, ladite pièce comprenant deux parois latérales (63, 65 ; 95, 97), allongées suivant une direction (C) et qui sont espacées suivant une direction (B) perpendiculaire à la direction (C) de manière à définir entre elles une fente (57 ; 93) suivant cette direction (B).

9. Pièce amovible permettant de transformer un écoulement de flude en jet de fluide oscillant selon la revendication 8. comportant deux embases (71, 73 ; 99, 101) perpendiculaires à la direction (C)et disposées aux deux extrémités opposées des parois latérales de manière à définir entre lesdites embases la dimension de la fente (57 ; 93) suivant cette direction (C).

10. Pièce amovible permettant de transformer un écoulement de fluide en jet de fluide oscillant selon la revendication 8 ou 9, dans laquelle une gorge (75) est pratiquée sur une zone périphérique de ladite pièce et qui est contenue dans un plan défini par les directions (B) et (C), ladite gorge étant destinée à recevoir un organe d'étanchéité (77).

11. Pièce amovible permettant de transformer un écoulement de fluide en jet de fluide oscillant selon l'une des revendications 8 à 10, dans laquelle les parois (95, 97) latérales s'étendent dans une direction (A) perpendiculaire à un plan défini par les directions (B) et (C) de manière à faire saillie dans la chambre d'oscillation (27) de l'oscillateur fluidique lorsque ladite pièce est incorporée dans celui-ci.

12. Procédé de fabrication d'un oscillateur fluidique (21) symétrique par rapport à un plan de symétrie longitudinal (P), comprenant une enceinte (25) délimitant une chambre d'oscillation (27) et ayant une ouverture d'entrée et une ouverture de sortie (45) par lesquelles s'écoule le fluide et qui sont alignées suivant ledit plan (P) dans une première direction (A) dite longitudinale, ladite ouverture d'entrée étant réalisée sous la forme d'une fente (57 ; 93) étroite dans une deuxième direction (B) dite transversale audit plan (P), allongée dans une troisième direction (C) parallèle audit plan (P) et perpendiculaire à la dite première direction longitudinale (A), **caractérisé en ce que** ledit procédé consiste à fabriquer ladite enceinte (25) en pratiquant dans celle-ci une cavité (39) de dimension transversale supérieure à la dimension transversale de ladite fente, à fabriquer séparément une pièce amovible (55 ; 91) en aménageant dans celle-ci ladite fente et à insérer ladite pièce amovible dans ladite cavité.

13. Procédé selon la revendication 12, consistant à fabriquer l'enceinte (25) de l'oscillateur fluidique par des opérations de moulage/démoulage puis par un usinage de l'enceinte ainsi démoulée.

14. Procédé selon la revendication 12 ou 13, consistant à fabriquer la pièce (55 ; 91) par des opérations de moulage/démoulage.

## Patentansprüche

1. Fluidischer Oszillator (21), der gegenüber einer Längssymmetrieebene (P) symmetrisch ist, umfassend eine Einfassung (25), die eine Oszillationskammer (27) begrenzt und eine Eingangs- und eine Ausgangsöffnung (45) aufweist, durch die das Fluid strömt und die nach der Ebene (P) in einer ersten so genannten Längsrichtung (A) ausgerichtet sind, wobei die Eingangsöffnung als Schlitz (57; 93) ausgeführt ist, der in einer zweiten so genannten Querrichtung (B) zu der Ebene (P) eng, in einer dritten Richtung (C) parallel zu der Ebene (P) und zu der ersten Längsrichtung (A) rechtwinklig ist, **dadurch gekennzeichnet, dass** der Schlitz (57; 93) in einem Stück (55; 91) eingerichtet ist, das gegenüber der Einfassung (25) abnehmbar ist.

2. Fluidischer Oszillator nach Anspruch 1, wobei das abnehmbare Stück (55; 91) zwei Seitenwände (63, 65; 95, 97) umfasst, die entlang der dritten Richtung (C) länglich sind und die entlang der zweiten Richtung (B) derart beabstandet sind, dass sie dazwischen die Abmessung des Schlitzes (57; 93) entlang dieser zweiten Richtung, die auch Breite 1 genannt wird, bestimmen.

3. Fluidischer Oszillator nach Anspruch 2, wobei das abnehmbare Stück (55; 91) zwei Ansätze (71, 73; 99, 101) umfasst, die zu der dritten Richtung (C) rechtwinklig sind und derart an den beiden entgegengesetzten Enden der Seitenwände angeordnet sind, dass sie zwischen den Ansätzen die Abmessung des Schlitzes (57; 93) entlang der dritten Richtung (C), die auch Höhe h genannt wird, bestimmen.

4. Fluidischer Oszillator nach einem der Ansprüche 1 bis 3, wobei das abnehmbare Stück (55; 91) in einen Hohlraum (39) eingesetzt wird, der in der Einfassung (25) vorgesehen ist und dessen Querabmessung d etwas größer ist als die des Stücks.

5. Fluidischer Oszillator nach Anspruch 4, wobei das abnehmbare Stück (55; 91) eine Rille (75) umfasst, die in einer Randzone des Stücks angebracht ist, die in einer Querebene enthalten ist, die von den Richtungen (B) und (C) bestimmt wird, wobei die Randrille dazu gedacht ist, ein Dichtungsorgan (77) aufzunehmen, das insbesondere mit den Wänden der Einfassung (25) zusammenwirkt, die den Hohlraum (39) bestimmen.

6. Fluidischer Oszillator nach Anspruch 2 und 4, wobei die Seitenwände (95, 97) des abnehmbaren Stücks (91) sich jeweils über mindestens einen ihrer Teile an die Wände der Einfassung (25) anschließen und sich über diese Teile hinaus entlang der ersten so genannten Längsrichtung derart verlängern, dass sie in die Oszillationskammer (27) hineinragen.

7. Fluidischer Oszillator nach Anspruch 3, wobei zwei entsprechende Stellen (103, 105) jeweils auf jedem Ansatz (99, 101) oberhalb des Schlitzes (93) eingerichtet sind, um ein Element (117) aufzunehmen, das dazu geeignet ist, das Geschwindigkeitsprofil der Fluidströmung oberhalb des Schlitzes zu ändern.

8. Abnehmbares Stück zum Umformen einer Fluidströmung in einen oszillierenden Fluidstrahl (55; 91), das dazu gedacht ist, in einen fluidischen Oszillator (21) nach einem der Ansprüche 1 bis 7 integriert zu werden, wobei das Stück zwei Seitenwände (63, 65; 95, 97) umfasst, die entlang einer Richtung (C) länglich sind und die entlang einer Richtung (B) rechtwinklig zu der Richtung (C) derart beabstandet sind, dass sie dazwischen einen Schlitz (57; 93) entlang dieser Richtung (B) bestimmen.

9. Abnehmbares Stück zum Umformen einer Fluidströmung in einen oszillierenden Fluidstrahl nach Anspruch 8, umfassend zwei Ansätze (71, 73; 99, 101), die zu der Richtung (C) rechtwinklig sind und an den beiden entgegengesetzten Enden der Seitenwände derart angeordnet sind, dass sie zwischen den Ansätzen die Abmessung des Schlitzes (57; 93) entlang dieser Richtung (C) bestimmen.

10. Abnehmbares Stück zum Umformen einer Fluidströmung in einen oszillierenden Fluidstrahl nach Anspruch 8 oder 9, wobei eine Rille (75) in einer Randzone des Stücks angebracht ist, und die in einer Ebene enthalten ist, die von den Richtungen (B) und (C) bestimmt wird, wobei die Rille dazu gedacht ist, ein Dichtungsorgan (77) aufzunehmen.

11. Abnehmbares Stück zum Umformen einer Fluidströmung in einen oszillierenden Fluidstrahl nach einem der Ansprüche 8 bis 10, wobei die Seitenwände (95, 97) sich derart in einer Richtung (A) erstrecken, die zu einer Ebene rechtwinklig ist, die von den Richtungen (B) und (C) bestimmt wird, dass sie in die Oszillationskammer (27) des fluidischen Oszillators hereinragen, wenn das Stück darin integriert ist.

12. Verfahren zur Herstellung eines fluidischen Oszillators (21), der gegenüber einer Längssymmetrieebene (P) symmetrisch ist, umfassend eine Einfassung (25), die eine Oszillationskammer (27) begrenzt und eine Eingangs- und eine Ausgangsöffnung (45) aufweist, durch die das Fluid strömt und die nach der Ebene (P) in einer ersten so genannten Längsrichtung (A) ausgerichtet sind, wobei die Eingangsöffnung als Schlitz (57; 93) ausgeführt ist, der in einer zweiten so genannten Querrichtung (B) zu der Ebene (P) eng, in einer dritten Richtung (C) parallel zu der Ebene (P) länglich und zu der ersten Längsrichtung (A) rechtwinklig ist, **dadurch gekennzeichnet, dass** das Verfahren darin besteht, die Einfassung (25) herzustellen, indem darin ein Hohlraum (39) angebracht wird, dessen Querabmessung größer ist als die Querabmessung des Schlitzes, getrennt ein abnehmbares Stück (55; 91) herzustellen, indem darin der Schlitz eingerichtet wird, und das abnehmbare Stück in den Hohlraum einzusetzen.

13. Verfahren nach Anspruch 12, das darin besteht, die Einfassung (25) des fluidischen Oszillators durch Ab-/Ausformvorgänge, dann durch die Bearbeitung der so ausgeformten Einfassung herzustellen.

14. Verfahren nach Anspruch 12 oder 13, das darin besteht, das Stück (55; 91) durch Ab-/ Ausformvorgänge herzustellen.

## Claims

1. Fluidic oscillator (21) symmetrical relative to a plane of longitudinal symmetry (P), comprising an enclosure (25) delimiting an oscillation chamber (27) and having an inlet opening and an outlet opening (45) through which the fluid flows and which are aligned along said plane (P) in a first so-called longitudinal direction (A), said inlet opening being made in the form of a narrow slit (57;93) in a second direction (B) called transverse direction to said plane (P), elongated in a third direction (C) parallel to said plane P and perpendicular to said first longitudinal direction (A), **characterized in that** said slit (57,93) is provided in a part (55;91) which is removable relative to said enclosure (25).

2. Fluidic oscillator as in claim 1, in which removable part (55;91) comprises two side walls (63,65;95,97), elongated along third direction (C) and spaced apart along second direction (B) so as between them to define the size of said slit (57;93) along this second direction also called width 1.

3. Fluidic oscillator as in claim 2, in which removable part (55;91) comprises two bases (71,73;99,101) perpendicular to third direction (C) and arranged at the two opposite ends of the side walls so as to define, between said bases, the size of slit (57;93) along third direction (C) also called height h.

4. Fluidic oscillator as in any of claims 1 to 3, in which removable part (55;91) is inserted in a cavity (39) provided in enclosure (25) whose cross dimension d is slightly greater than that of said part.

5. Fluidic oscillator as in claim 4, in which removable part (55;91) comprises a groove (75) made on a peripheral zone of said part which is contained in a transverse plane defined by directions (B) and (C), said peripheral groove being intended to house a sealing member (77) cooperating in particular with the walls of enclosure (25) defining cavity (39).

6. Fluidic oscillator as in claims 2 and 4, in which the side walls (95,97) of removable part (91) respectively connect to the walls of enclosure (25)by at least one of their parts and extend beyond said parts along the first so-called longitudinal direction so as to project into oscillation chamber (27).

7. Fluidic oscillator as in claim 3, in which two corresponding housings (103,105) are respectively made on each base (99,101) upstream from slit (93) to house a member (117) which is able to modify the speed profile of the fluid flow upstream from said slit.

8. Removable part enabling transformation of the fluid flow into an oscillating fluid jet (55;91) intended to be incorporated in a fluidic oscillator (21) as in any of claims 1 to 7, said part comprising two side walls (63,65;95,97) elongated along a direction (C) and spaced part along a direction (B) perpendicular to direction (C) so as between them to define a slit (57;93) along this direction (B).

9. Removable part enabling transformation of a fluid flow into an oscillating fluid jet as in claim 8, comprising two bases (71,73;99,101) perpendicular to direction (C) and positioned at the two opposite ends of the side walls so as to define, between said bases, the size of the slit (57;93) along this direction (C).

10. Removable part enabling transformation of a fluid flow into an oscillating fluid jet as in claim 8 or 9, in which a groove (75) is made on a peripheral zone of said part which is contained in a plane defined by directions (B) and (C), said groove being intended to house a sealing member (77).

11. Removable part enabling transformation of a fluid flow into an oscillating fluid jet as in any of claims 8 to 10, in which the side walls (95,97) extend along a direction (A) perpendicular to a plane defined by directions (B) and (C) so as to project into oscillation chamber (27) of the fluidic oscillator when said part is incorporated therein.

12. Method for manufacturing a fluidic oscillator (21) symmetrical relative to a longitudinal plane of symmetry (P), comprising an enclosure (25) delimiting an oscillation chamber (25) and having an inlet opening and an outlet opening (45) through which the fluid flows and which are aligned along said plane (P) in a first so-called longitudinal direction (A), said inlet opening being made in the form of a narrow slit (57;93) in a second direction (B) called transverse direction to said plane (P), elongated in a third direction (C) parallel to said plane (P) and perpendicular to said first longitudinal direction (A), **characterized in that** said method consists of manufacturing said enclosure (25) by making a cavity (39) therein whose cross dimension is greater than the cross dimension of said slit, of separately manufacturing a removable part (55;91) by providing a slit therein, and of inserting said removable part in said cavity.

13. Method as in claim 12, consisting of manufacturing enclosure (25) of the fluidic oscillator by moulding/mould release operations and subsequent machining of the enclosure released from the mould.

14. Method as in claim 12 or 13, consisting of manufacturing part (55;91) by moulding/mould release operations.
